# EUROPÄISCHE PATENTANMELDUNG

(11) **EP 2 554 326 A1**
(43) Veröffentlichungstag der Anmeldung: **06.02.2013**
(21) Anmeldenummer: 12005344.2
(22) Anmeldetag: 21.07.2012
(51) Int. Cl.: B23Q 3/155

(54) **Werkzeugmaschine mit einem Werkzeugmagazin und einem gelenkigen Werkzeugwechsler**

(30) Priorität: 02.08.2011 DE 102011109288
(71) Anmelder: KERN Micro- und Feinwerktechnik GmbH & Co. KG, 82438 Eschenlohe (DE)
(72) Erfinder: Wolf, Florian, 82439 Kleinweil (DE)
(74) Vertreter: Flosdorff, Jürgen

(57) **Zusammenfassung**

Die Werkzeugmaschine, insbesondere Fräsmaschine, mit einem Arbeitsraum, in dem eine verfahrbare Arbeitsspindel angeordnet ist, an der ein auswechselbares Werkzeug befestigbar ist, mit einem Werkzeug-Magazin, in dem zahlreiche Werkzeuge untergebracht sind, und mit einem Werkzeug-Wechsler, der einen Schwenkarm mit zwei Greifern hat, um der Arbeitsspindel ein neues Werkzeug zuzuführen und das benutzte Werkzeug abzuholen, ist dadurch gekennzeichnet, dass der Schwenkarm als ein Mehrfachgelenk ausgebildet ist und von einem linearen Antrieb entlang einer durch die Länge der Einzelglieder und der Anlenkpunkte definierten Kurve zwischen einer Werkzeug-Übergabeposition an dem Werkzeug-Magazin und einer Werkzeug-Wechselposition in dem Arbeitsraum schwenkbar ist.

## Beschreibung

Die Erfindung betrifft eine Werkzeugmaschine, insbesondere Fräsmaschine, mit einem Arbeitsraum, in dem eine verfahrbare Arbeitsspindel angeordnet ist, an der ein auswechselbares Werkzeug befestigbar ist, ferner mit einem Werkzeugmagazin, in dem zahlreiche Werkzeuge untergebracht sind, und mit einem Werkzeugwechsler, der einen Schwenkarm mit zwei Greifern hat, um der Arbeitsspindel ein neues Werkzeug zuzuführen und das benutzte Werkzeug abzuholen. Die Erfindung ist auch auf andere Werkzeugmaschinen wie beispielsweise Bohrmaschinen anwendbar.

Bei der Bearbeitung von Werkstücken in einer Fräsmaschine muss ab und zu das von der Arbeitsspindel geklemmte Werkzeug gewechselt werden. Dabei fährt auf die Aufforderung der Maschinensteuerung hin die Arbeitsspindel in die festgelegte Wechselposition, der Schwenkarm des Werkzeugswechslers fährt von der Werkzeugübergabeposition an dem Werkzeugmagazin, wo einer der beiden Greifer das neue Werkzeug von einem Magazingreifer übernommen hat, zu der Arbeitsspindel in der Wechselposition, wo das in der Arbeitsspindel geklemmte, benützte Werkzeug von dem leeren Greifer des Schwenkarms aus zu der Arbeitsspindel entnommen wird, woraufhin das neue Werkzeug, das in dem anderen Greifer festgeklemmt ist, an einer dicht benachbarten Position in die Arbeitsspindel eingeführt und dort wieder in die Arbeitsspindel gespannt wird, wonach der Schwenkarm wieder aus dem Arbeitsraum heraus schwenkt und das benützte Werkzeug an den Magazingreifer übergibt. Die Arbeitsspindel fährt wieder in ihre Arbeitsposition und setzt die Bearbeitung des Werkstücks mit dem neuen Werkzeug fort.

Bei den bisher bekannten Werkzeugmaschinen der betrachteten Art wird die Verfahrbewegung des Werkzeugwechselarms durch einen Drehmotor oder Drehzylinder hervorgerufen. Ein solcher Antrieb ist mit beträchtlichen Kosten verbunden und störanfällig.

Im Hinblick hierauf liegt der vorliegenden Erfindung die Aufgabe zugrunde, eine Werkzeugmaschine der betrachteten Art anzugeben, deren Werkzeugwechsler billiger herstellbar ist und mit größerer Zuverlässigkeit arbeitet.

Außerdem sind bei den bisher anzutreffenden Werkzeugmaschinen der betrachteten Art die Werkzeugwechselmagazine als Rund- oder Kettenmagazine ausgeführt. Hierbei ist das Einsortieren der Werkzeuge in das Werkzeug-Magazin für den Bediener der Maschine umständlich und zeitaufwändig. Es ist daher angestrebt, für dieses Problem eine besser Lösung zu finden.

Nach einem ersten Aspekt sieht die Erfindung vor, dass der Schwenkarm des Werkzeugwechslers als ein aus mehreren Einzelgliedern zusammen gesetztes Mehrfachgelenk ausgebildet ist und von einem linearen Antrieb entlang einer durch die Länge der Einzelglieder und die Anlenkpunkte definierten Kurve zwischen einer Werkzeug-Übergabeposition an dem Werkzeug-Magazin und einer Werkzeug-Wechselposition in dem Arbeitsraum schwenkbar ist. Da die Kurvenbahn des Werkzeugwechsler-Arms auf diese Weise mechanisch vorgegeben ist, kann ein einfacher Linearzylinder diese Bewegung ausführen. Dies ist mit verhältnismäßig geringen Kosten verbunden und erfolgt mit größter Zuverlässigkeit.

In näheren Einzelheiten ist vorgesehen, dass der Schwenkarm aus drei Einzelgliedern besteht, die über zwei Gelenke miteinander verbunden sind, wobei zwei der Einzelglieder über ortsfeste Gelenke an einer Basis, bevorzugt dem Gestell oder Rahmen des Magazins, angebracht und mit ihren anderen Enden an dem dritten Einzelglied, das hiermit ein Zwischenglied bildet, angelenkt sind. Die beiden Greifer sind an dem Zwischenglied nebeneinander befestigt.

Die Greifer sind herkömmlicher Art und enthalten jeweils zwei Greifarme, die auf Signale hin ein Werkzeug zwischen sich festklemmen oder freigeben können.

Die lineare Antriebseinrichtung ist bevorzugt eine lineare Zylinder/Kolbeneinheit, die an einer Basis, bevorzugt dem Magazingestell, befestigt ist und mit einem der ortsfest angelenkten Einzelglieder antriebsmäßig verbunden ist. Hierzu ist ihre ausfahrbare Stange im Abstand von dem ortsfesten Gelenk mit dem Einzelglied gelenkig verbunden. Der lineare Antrieb kann z.B. eine pneumatische Zylindereinheit/Kolben oder ein elektrischer Linearmotor sein.

Das Werkzeug-Magazin hat nach einem weiteren Gesichtspunkt der Erfindung die Form eines Schranks, in dem die Werkzeuge von außen frei zugänglich angeordnet sind. Große Türen ermöglichen den freien Zutritt zu allen Werkzeugen.

In näheren Einzelheiten wird vorgeschlagen, dass das Werkzeug-Magazin Befestigungsbleche aufweist, die Löcher haben, in die Werkzeugpaletten einhängbar sind, an denen jeweils mehrere Werkzeuge lösbar befestigt sind. Die Werkzeuge sind in den Werkzeugpaletten bevorzugt zwischen Paaren von Haltefingern eingeklemmt, die sich zur Entnahme eines Werkzeugs elastisch aufspreizen lassen. Dabei sind bevorzugt ca. 20 Paletten mit jeweils neun Werkzeugen in die durch Befestigungsbleche gebildete Rückwand des schrankartigens Magazin einhängbar.

Das Werkzeug-Magazin ist vorzugsweise mit einem Zahnriemenportal versehen, mit dem ein Magazin-Greifer zwischen jeder Werkzeug-Position und einer Übergabeposition des ausgewählten Werkzeugs an den zugeordneten Schwenkarm des Werkzeug-Wechslers transportierbar ist. Der Magazin-Greifer ist an einem Schlitten befestigt, der mittels Zahnriemen in x-, y- und z-Richtung verfahrbar ist.

Das erfindungsgemäße Werkzeug-Magazin erleichtert es dem Bediener, außerhalb der Maschine jeweils eine Palette mit beispielsweise 3 bis 10 Werkzeugen vorzubereiten und dann die Palette in das Magazin einzulegen bzw. einzuhängen. Der Zahnriemenmechanismus des Werkzeug-Magazins ermöglicht in Zusammenwirken mit dem mechanisch geführten Werkzeugwechsler-Schwenkarm mit dem Linearzylinder ein schnelles und sicheres Wechseln des Werkzeugs.

Weitere Einzelheiten der Erfindung ergeben sich aus der nachfolgenden Beschreibung einer bevorzugten Ausführungsform der Erfindung sowie anhand der Zeichnungen. Dabei zeigen:
- Figur 1: eine Gesamtansicht einer Fräsmaschine mit dem erfindungsgemäßen Werkzeugwechsler;
- Figur 2: die Maschine gemäß Figur 1 in einer Ansicht auf das Werkzeug-Magazin;
- Figur 3: eine vergrößerte Detail-Darstellung des Schwenkarms des Werkzeug-Wechslers und des Magazin-Greifers;
- Figuren 4A bis 4F: schematische Darstellungen des Schwenkarms des Werkzeug-Wechslers bei der Bewegung von der Werkzeug-Übergabeposition an dem Magazin zu der Werkzeug-Wechselposition an der Arbeitsspindel;
- Figur 4G: eine perspektivische Ansicht mit einem Anschlag und einem Stoßdämpfer für die eingefahrene Stellung des Greifers, kurz vor Erreichen der Werkzeug-Übergabeposition;
- Figur 4H: eine perspektivische Darstellung mit einem Anschlag und einem Stoßdämpfer für die ausgefahrene Position, kurz vor Erreichen der Werkzeug-Wechselposition;
- Figur 5: eine Ansicht des leeren Werkzeug-Magazins mit dem Zahnriemenportal und dem eingefahrenen Schwenkarm;

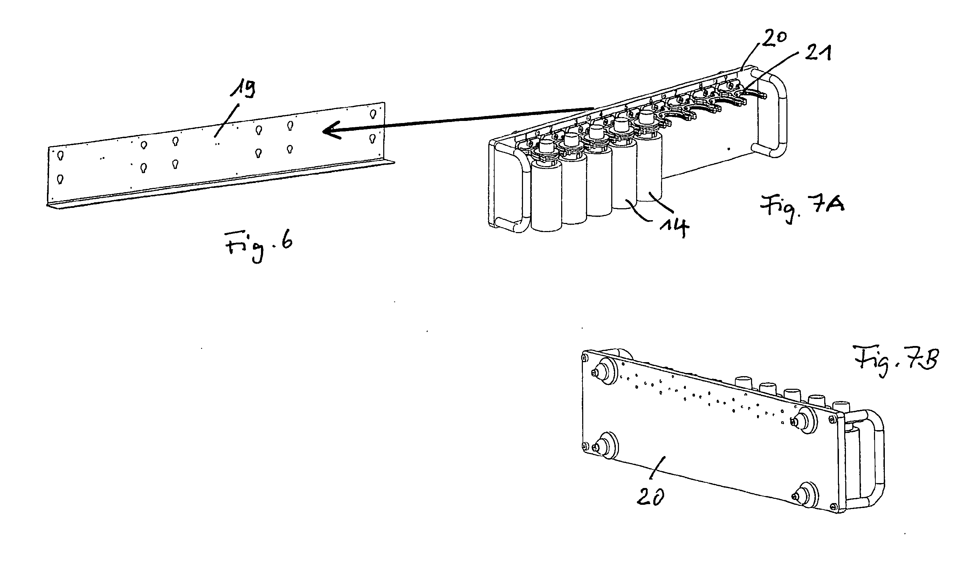

- Figur 6: ein Einhängeblech für eine Werkzeugpalette,
- Figuren 7A und 7B Figur 8: eine Werkzeugpalette in zwei verschiedenen Ansichten und den Magazin-Greifer bei der Entnahme eines Werkzeugs aus dem Magazin, wobei der Schwenkarm an der Übergabeposition zur Aufnahme des Werkzeugs bereit steht.

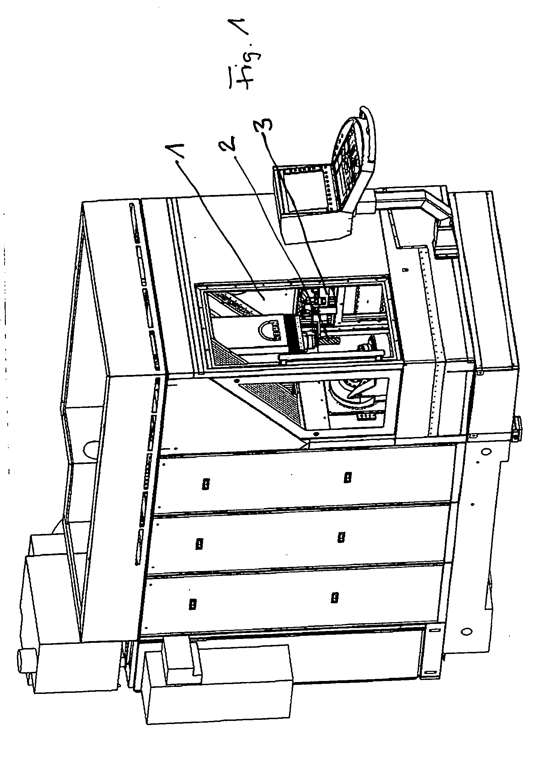

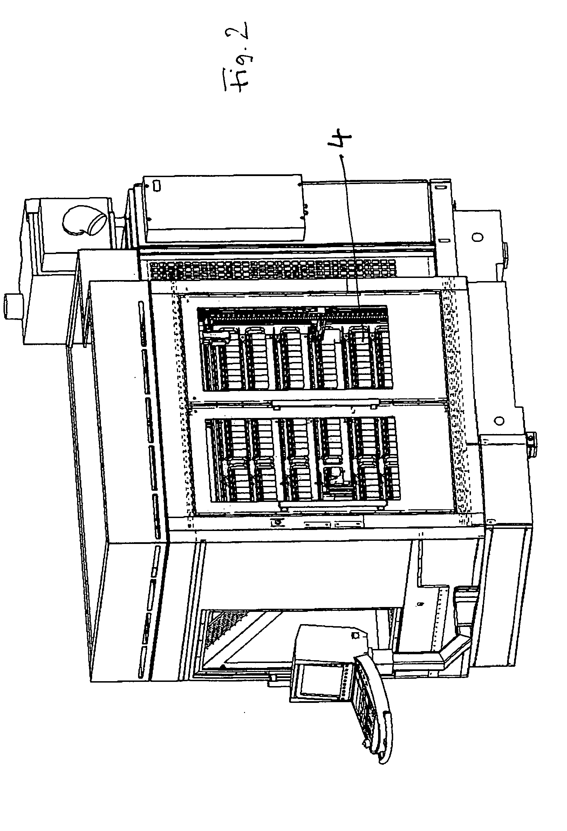

Die Figuren 1 und 2 zeigen Gesamtansichten einer Fräsmaschine. Die Maschine hat einen Arbeitsraum 1, in dem eine Arbeitsspindel 2 angeordnet ist, die in x-, y- und z-Richtung verfahrbar ist, wie dies üblich ist. Die Ansicht des Arbeitsraums lässt seitlich neben der Arbeitsspindel 2 einen Werkzeug-Wechsler 3 erkennen.

Die Seitenansicht der Figur 2 zeigt das von Türen verschlossene Werkzeug-Magazin 4, das die Form eines Schranks hat, in dem die Werkzeuge in übereinander liegenden Reihen angeordnet sind. Ein Portal-Be- und Entladesystem, das mit Zahnriemen, Luft oder elektrisch betrieben werden kann, ermöglicht es einem Magazin-Greifer, jedes ausgewählte Werkzeug aus seiner Halterung heraus zu ziehen und zu einer Übergabeposition zu befördern, an der das Werkzeug von einem Greifer des Schwenkarms des Werkzeug-Wechslers übernommen wird.

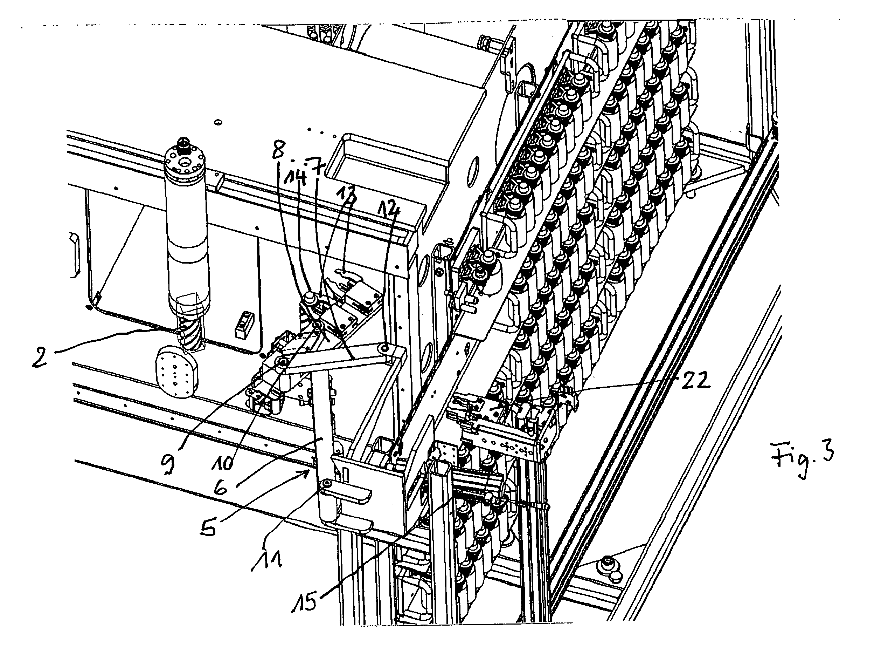

Die vergrößerte Darstellung der Figur 3 zeigt den insgesamt mit dem Bezugszeichen 5 bezeichneten Schwenkarm des Werkzeug-Wechslers in einer Zwischenstellung zwischen der Werkzeug-Übergabeposition an dem Werkzeug-Magazin und der Arbeitsspindel 2. Der Schwenkarm 5 enthält drei Einzelglieder 6, 7 und 8, die mit Gelenken 9, 10 miteinander verbunden sind. Die Einzelglieder 6 und 7 sind an den Gelenkpunkten 11 und 12 ortsfest angelenkt. An dem Zwischenglied 8 sind nebeneinander liegend zwei Werkzeug-Greifer 13 befestigt, von denen der in der Figur linke Greifer zwischen seinen Greifarmen ein neues Werkzeug 14 festklemmt, das an die Arbeitsspindel 2 übergeben werden soll.

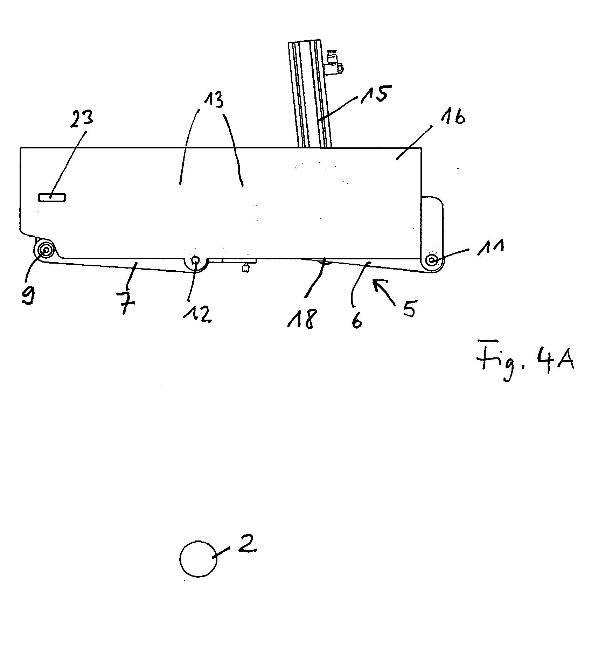

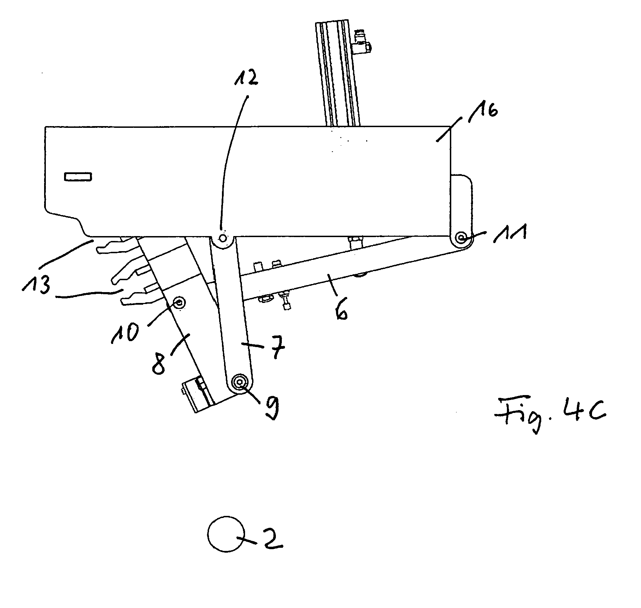

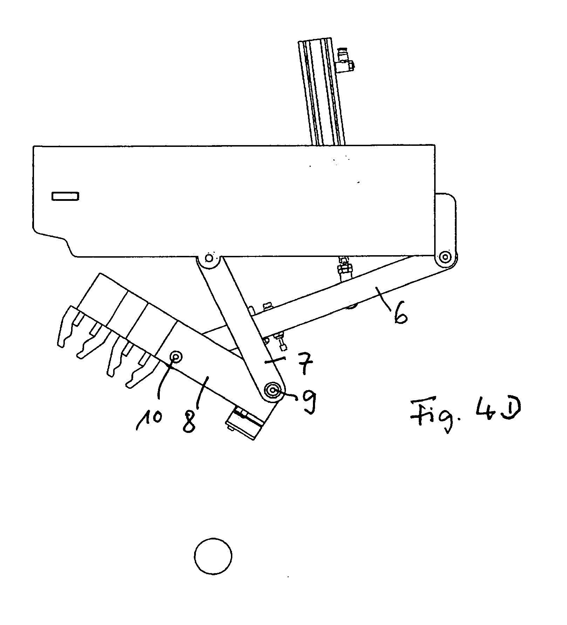

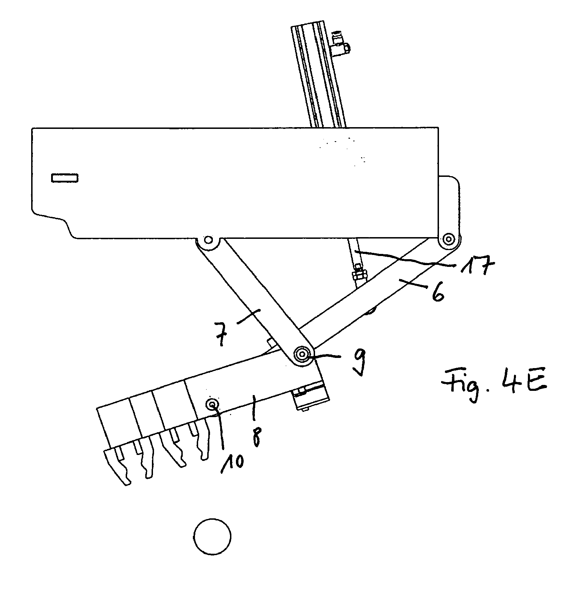

Die Schwenkbewegung wird von einer linearen Antriebsvorrichtung, einem Linearzylinder 15, hervorgerufen, dessen Kolbenstange gelenkig mit dem Einzelglied 6 verbunden ist, wie dies besser aus den schematischen Darstellungen der Figuren 4A bis 4E zu sehen ist.

Diese Darstellungen zeigen in Figur 4A den eingefahrenen Zustand des Schwenkarms 5, in dem einer der Greifer 13 ein aus dem Magazin kommendes neues Werkzeug 14 aufnimmt. Mit dem Bezugszeichen 16 ist ein Blech des Gestells bzw. Rahmens des Magazins bezeichnet, an dem die Einzelglieder 6 und 7 mit ihren Enden ortsfest angelenkt sind (Gelenkpunkte 11, 12).

Die Kolbenstange 17 der Zylinder/Kolbenanordnung 15 ist bei 18 gelenkig mit dem Einzelglied 6 verbunden. Die Arbeitsspindel 2 befindet sich in der durch den Kreis angedeuteten Übernahmeposition.

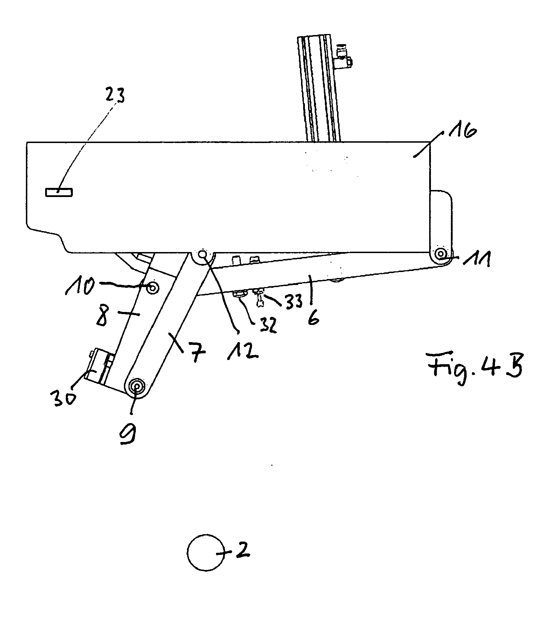

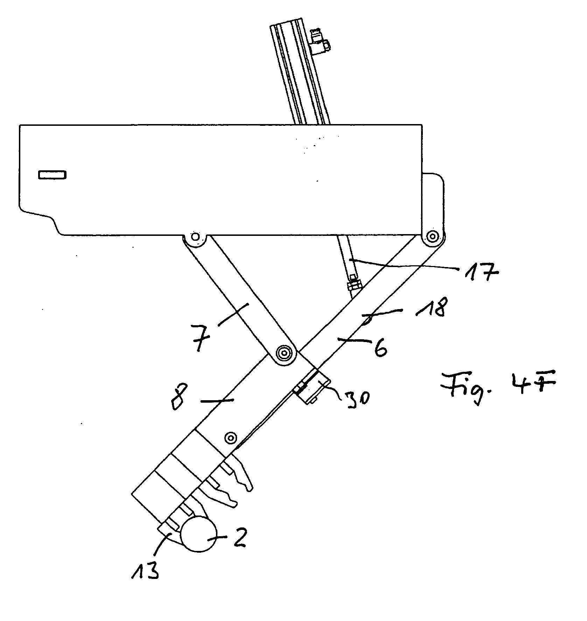

Die folgenden Figuren 4B bis 4F zeigen schematisch den Bewegungsablauf des Schwenkarms in mehreren Phasen bis zu der Arbeitsspindel 2. In Figur 4F ergreift einer der beiden Greifer 13 das zuvor benutzte Werkzeug, das an der Spindel 2 fest geklemmt ist und nimmt dieses auf. Daraufhin fährt die Arbeitsspindel über den anderen Greifer, der ein in diesen Figuren nicht dargestelltes neues Werkzeug hält (siehe Figur 3), wobei das neue Werkzeug in die Spindel eingeführt und von der Spindel gespannt wird. Der Schwenkarm 5 bringt dann in einem umgekehrten Bewegungsablauf das benutzte Werkzeug zu der Übergabeposition an dem Werkzeug-Magazin zurück.

Die Werkzeug-Übergabeposition an dem Magazin in der eingefahrenen Stellung des Schwenkarms und die Werkzeug-Wechselposition in der ausgefahrenen Stellung des Schwenkarms sind jeweils durch einen Anschlag vorgegeben, der mit einem benachbarten Stoßdämpfer kombiniert ist, der einen harten Aufprall auf den jeweiligen Anschlag vermeidet.

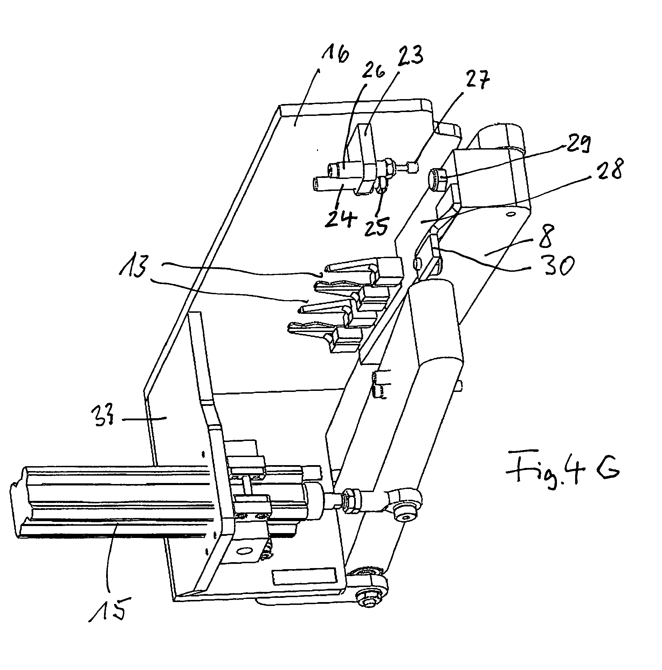

Figur 4G zeigt eine perspektivische Ansicht unter das Blech 16 des Rahmens, unter das eine Platte 23 angeschweißt ist, die zwei Gewindebohrungen enthält. In eine der Gewindebohrungen ist ein Anschlag 24 eingeschraubt, dessen gehärteter Kopf 25 die Anschlagposition definiert, die wegen des Gewindeeingriffs einstellbar ist. Seitlich neben dem Anschlag 24 ist ein Stopfdämpfer 26 mit einer Kunststoffkappe 27 in die Platte 23 eingeschraubt.

An dem Zwischenglied 8 ist an der die Greifer 1 3 haltenden Seitenwand 28 ein Anschlag 29 angebracht, der mit seinem Gewindeabschnitt in eine zugehörige Bohrung eingeschraubt ist. Dieser Anschlag 29 befindet sich an einer solchen Stelle, dass er auf den Anschlagkopf 25 auftrifft. Zuvor läuft bei der Bewegung in die eingefahrene Endstellung die Seitenwand 28 auf den Kopf 27 des Stopfdämpfers 26 auf und drückt diesen um ca. 10 mm zurück, wodurch die Bewegung des Zwischenglieds 8 soweit gedämpft wird, dass sich die beiden Anschläge 25, 29 weitgehend stoßfrei aneinander anlegen können.

Unterhalb des Festanschlags 29 ist eine gebogene Platte 30 an der Seitenwand 28 des Zwischenglieds 8 angeschweißt. An der rückwärtigen Seite der aufgebogenen Platte 30 ist ein Anschlag 31 befestigt, dessen Schaft eine Bohrung der Platte 31 durchgreift. Der Anschlag 31 wirkt mit einem Anschlag 32 zusammen, der an einer entsprechenden Stelle des Einzelglieds 6 befestigt ist, indem er mit seinem Gewindeschaft in eine Bohrung des Einzelglieds 6 eingeschraubt ist. Damit ist seine Position einstellbar.

Neben dem Anschlag 32 befindet sich wiederum ein Stoßdämpfer 33, der ebenfalls in ein Gewindeloch eingeschraubt ist.

Kurz bevor der Schwenkarm 5 seine ausgefahrene Position (Werkzeug-Wechselposition an der Arbeitsspindel) erreicht, trifft die Platte 30 neben dem Anschlag 31 auf den Stoßdämpfer 33 auf, der die Bewegung so abbremst, dass der Anschlag 31 sanft auf den Anschlag 32 auftrifft, nachdem die Kunststoffkappe des Stopfdämpfers 33 um ca. 10 mm zurück gedrückt wurde.

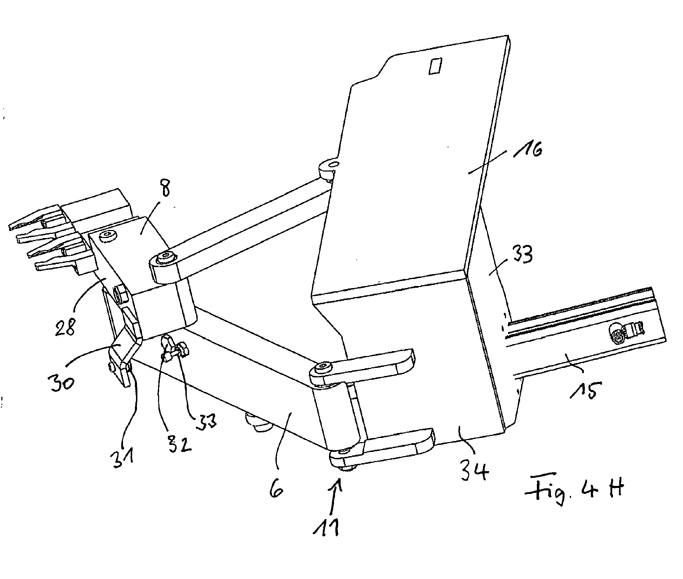

Die Figuren 4G und 4H zeigen außerdem zwei mit dem Blech 16 verbundene Seitenwände 33 und 34 des Rahmens, an denen der Linearzylinder 15 und das Gelenk 11 befestigt sind.

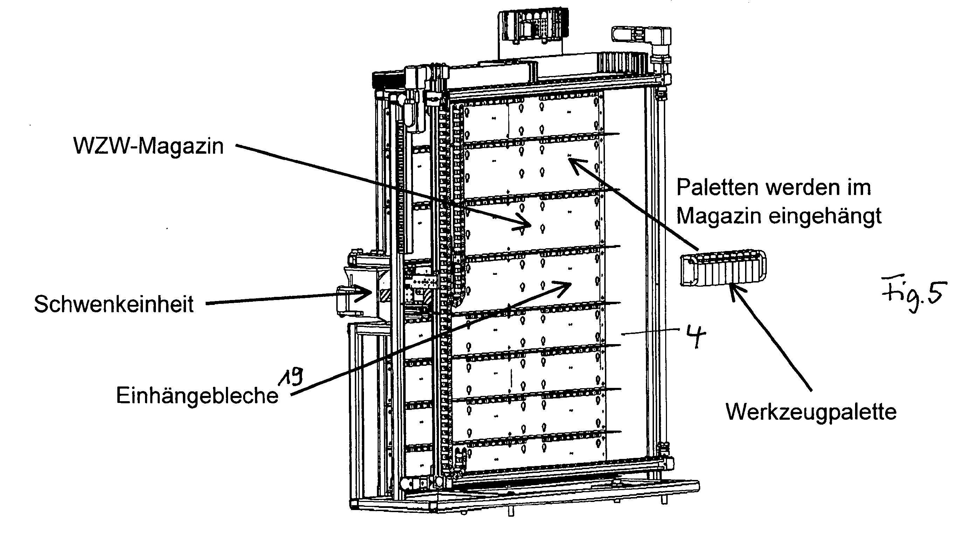

Figur 5 zeigt das Werkzeug-Magazin 4 in einem leeren Zustand. Die Rückseite des Werkzeug-Magazins 4 ist durch Bleche 19 mit Schlüsselloch-ähnlichen Löchern gebildet, in die Werkzeugpaletten 20 einhängbar sind, die an der Rückseite mit entsprechenden Vorsprüngen versehen sind, die in die Löcher eingesetzt und darin verankert werden.

Die Werkzeugpaletten 20 haben an ihrem oberen Randabschnitt elastische Greifarme, zwischen denen eingeschnürte Halsabschnitte der Werkzeuge 14 festgeklemmt sind.

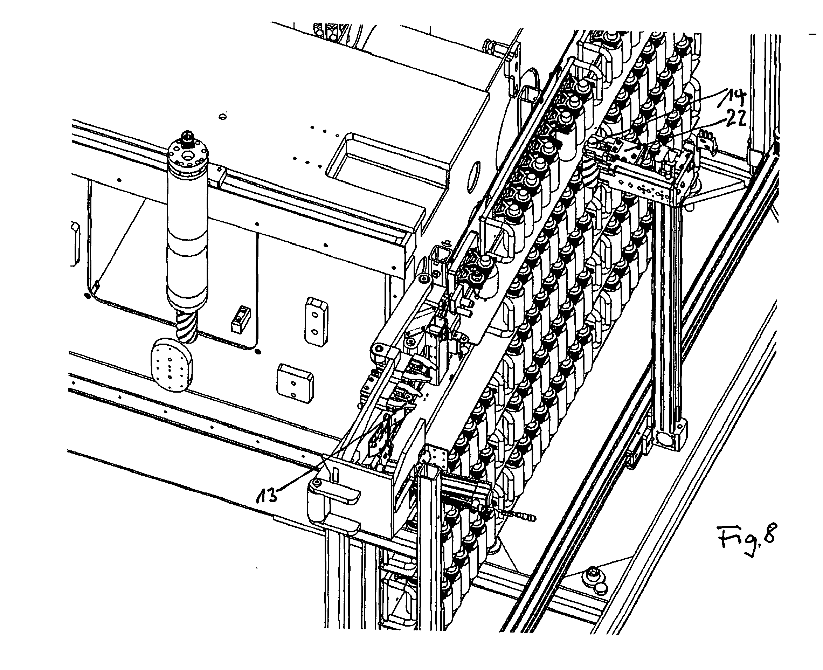

Jedes Werkzeug 14 kann von einem Magazingreifer 22 (siehe Figur 8) aus seiner Halterung 21 herausgezogen werden. Der Magazingreifer 22 ist an einem Schlitten befestigt, der mit Hilfe eines Zahnriemen-Portals des Magazins 4 in x-, y- und z-Richtung verfahrbar ist. Das neue Werkzeug 14, das in der Darstellung der Figur 8 aus seiner Halterung in dem Magazin 4 entnommen wird, wird von dem Magazingreifer 22 zu der aus Figur 8 ersichtlichen Übergabeposition transportiert, in der der zugehörige Greifer 13 des Schwenkarms 5 zur Aufnahme des Werkzeugs 14 bereit steht.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Werkzeugmaschine, insbesondere Fräsmaschine, mit einem Arbeitsraum, in dem eine verfahrbare Arbeitsspindel angeordnet ist, an der ein auswechselbares Werkzeug befestigbar ist, mit einem Werkzeug-Magazin, in dem zahlreiche Werkzeuge untergebracht sind, und mit einem Werkzeug-Wechsler, der einen Schwenkarm mit zwei Greifern hat, um der Arbeitsspindel ein neues Werkzeug zuzuführen und das benutzte Werkzeug abzuholen,
**dadurch gekennzeichnet,**
**dass** der Schwenkarm (5) als ein Mehrfachgelenk ausgebildet ist und von einem linearen Antrieb (15, 18) entlang einer durch die Länge der Einzelglieder und der Anlenkpunkte definierten Kurve zwischen einer Werkzeug-Übergabeposition an dem Werkzeug-Magazin (4) und einer Werkzeug-Wechselposition in dem Arbeitsraum (1) schwenkbar ist.

2. Werkzeugmaschine nach Anspruch 1,
**dadurch gekennzeichnet,**
**dass** der Schwenkarm (5) aus drei Einzelgliedern (6,7,8) besteht, die über zwei Gelenke (9,10) miteinander verbunden sind, dass zwei Einzelglieder (6,7) über ortsfeste Gelenke (11,12) an einer Basis (16) angebracht und anderenends an dem ein Zwischenglied bildenden dritten Einzelglied (8) angelenkt sind.

3. Werkzeugmaschine nach Anspruch 2,
**dadurch gekennzeichnet,**
**dass** die beiden Greifer (13) an dem Zwischenglied (8) befestigt sind.

4. Werkzeugmaschine nach einem der Ansprüche 1 bis 3,
**dadurch gekennzeichnet,**
**dass** die lineare Antriebseinrichtung (15) ein Linearzylinder ist, der mit einem der ortsfest angelenkten Einzelglieder (6) antriebsmäßig verbunden ist.

5. Werkzeugmaschine nach einem der Ansprüche 1 bis 4,
**dadurch gekennzeichnet,**
**dass** die Werkzeug-Übergabeposition und die Werkzeug-Wechselposition durch Anschläge (25,29; 31, 32) festgelegt sind.

6. Werkzeugmaschine nach Anspruch 5,
**dadurch gekennzeichnet,**
**dass** die Anschläge (25,32) einstellbar sind.

7. Werkzeugmaschine nach einem der Ansprüche 5 oder 6,
**dadurch gekennzeichnet,**
**dass** Stoßdämpfer (26,33) angeordnet sind, die den Aufprall auf die Anschläge (25,32) dämpfen.

8. Werkzeugmaschine nach einem der Ansprüche 1 bis 7,
**dadurch gekennzeichnet,**
**dass** das Werkzeug-Magazin (4) die Form eines Schranks hat, in dem die Werkzeuge (14) in übereinander angeordneten Reihen angeordnet sind.

9. Werkzeugmaschine nach Anspruch 8,
**dadurch gekennzeichnet,**
**dass** das Werkzeug-Magazin (4) Befestigungsbleche (19) aufweist, in die Werkzeug-Paletten (20) einhängbar sind, an denen jeweils mehrere Werkzeuge (14) lösbar befestigbar sind.

10. Werkzeugmaschine nach Anspruch 8 oder 9,
**dadurch gekennzeichnet,**
**dass** das Werkzeug-Magazin mit einem Portal-Be- und Entladesystem, das mit Zahnriemen, Luft oder elektrisch betreibbar ist, versehen ist, mit dem ein Magazin-Greifer (22) verbunden ist, der zwischen einer ausgewählten Entnahmeposition des Werkzeug-Magazins (4) und der Werkzeug-Übergabeposition bewegbar ist.
